# EUROPÄISCHE PATENTSCHRIFT

(11) **EP 2 156 921 B1**
(45) Veröffentlichungstag und Bekanntmachung des Hinweises auf die Patenterteilung: **26.10.2011**
(21) Anmeldenummer: 08105090.8
(22) Anmeldetag: 21.08.2008
(51) Int. Cl.: B23Q 1/34, B23Q 1/70, B23Q 11/00, B24B 41/00

(54) **Vorrichtung zur Verminderung von Schwingungen einer Werkzeugspindel**
Device for reducing oscillations of a tool spindle
Dispositif de réduction d'oscillations d'une broche d'outil

(43) Veröffentlichungstag der Anmeldung: 24.02.2010
(73) Patentinhaber: Step-Tec AG, 4542 Luterbach (CH)
(72) Erfinder: Schneider, Kurt, 2565, Jens (CH); Monnin, Jérémie, 2560, Nidau (CH); Reinhard, Edwin, 3362, Niederönz (CH)
(74) Vertreter: De Colle, Piergiacomo

(56) Entgegenhaltungen:
- EP-A- 1 175 960
- CH-A5- 653 590
- DE-C1- 19 531 506

## Beschreibung

Die Erfindung betrifft eine Vorrichtung und ein Verfahren zur Verminderung von Schwingungen einer rotierenden in mindestens einem Front - und einem Hinterlager gelagerten Spindel in einer Werkzeugmaschine.

Bei Werkzeugmaschinen, insbesondere Hochfrequenzfräsmaschinen, sind hohe Genauigkeiten erforderlich. Diese Genauigkeiten werden häufig durch die Lagerung der Spindel, die Konstruktion, Verschleiss, Überlast etc. der einzelnen damit verbundenen Bauteile beeinflusst.

In der DE 103 44 293 A1 weist eine Schleifmaschine eine Maschineneinrichtung auf, die mittels einer geeigneten Messeinrichtung die Taumelbewegung eines zu bearbeitenden Werkstücks bestimmt. Die Schleifwerkzeuge werden dem taumelnden Werkstück so nachgeführt, dass das Werkstück masshaltig und konzentrisch bearbeitet wird.

Die EP 1 882 548 A1 offenbart eine Werkzeugmaschine, bei der an der Spindellagerung eine dynamische Spindelverstellung vorgesehen ist, die eine Verstellbewegung zur Kompensation eines Taumelschlags des von der Spindel gehaltenen Körpers gestattet.

Die CH 653 590 A5 offenbart ein aktives Dämpfungs- und Auslenkregelungssystem für Innenschleifaggregate. Diese Vorrichtung weist einen an der Spitze des Schleifdornes bzw. im Bereich der Schleifscheibe angeordneten optischen Messpunkt (Spiegel) auf. Entsteht z.B. bei der Innenschleifbearbeitung einer Bohrung eine Durchbiegung der Schleifspindel und des Schleifdornes, so kann über eine Kontrolllogik und über piezoelektronische Kraftelemente die am Messpunkt optisch gemessene Durchbiegung auskorrigiert werden.

Ausgehend von diesem Stand der Technik ist es die Aufgabe der Erfindung eine Vorrichtung und ein Verfahren vorzuschlagen, welches die unerwünschten Schwingungen der rotierenden Spindel schnell und zuverlässig auskorrigiert oder vermindern kann, indem insbesondere die Genauigkeit der Zustelltiefe, der Zustellbreite, der Spindeldrehzahl etc. dahingehend gesteuert wird, dass eine optimale Genauigkeit des zu bearbeitenden Werkzeugs erzielt wird.

Diese Aufgabe wird erfindungsgemäss durch die Merkmale im unabhängigen Anspruch 1

Weiterhin wird die Aufgabe durch ein Verfahren gelöst, welches zur Verminderung der Schwingungen der rotierenden Spindel zunächst die Messwerte der Messeinrichtungen von der Steuereinheit erfasst werden und in Echtzeit die aus den Messwerten berechneten Korrekturwerte an die Korrektureinrichtungen weitergegeben werden, welche die Spindel in die gewünschte nahezu schwingungsfreie Position bringen.

Als Messeinrichtungen dienen beispielsweise mindestens ein berührungsfreier Ortsgeber, mindestens ein Beschleunigungsmesser, mindestens ein Dehnmessstreifen und/oder mindestens einen Winkelgeber

Vorzugsweise kann als Beschleunigungsmesser ein dreiachsig messender Beschleunigungssensor in die Spindel eingesetzt werden. Ein solcher dreidimensionaler Beschleunigungssensor ist ein dreiachsiger messender Beschleunigungssensor zum Messen von Vibrationen und Schwingungen mit Spannungsausgang. Der Beschleunigungssensor misst gleichzeitig die drei Raumkomponenten x, y, z der wirkenden Beschleunigung.

Als Korrektureinrichtungen können mindestens ein Piezoelement und/oder elektrorheologische Einrichtungen vorgesehen sein.

Die Anordnung der Mess - und/oder Korrektureinrichtungen ergeben sich beispielhaft aus den Unteransprüchen.

Die Erfindung ist in der Zeichnung als Ausführungsbeispiel dargestellt. Es zeigen
Fig. 1 einen Längsschnitt
Fig. 2 einen Querschnitt der Vorrichtung
Fig.3 die Anordnung eines drelachsig messenden Beschleunigungssensors

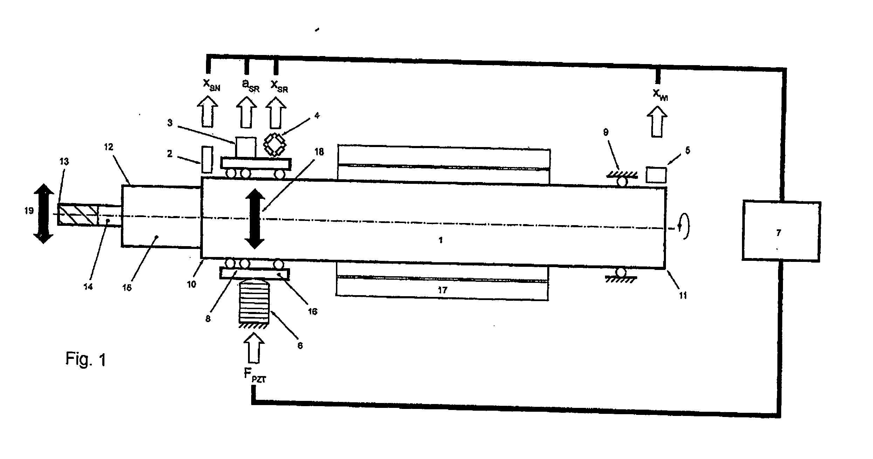

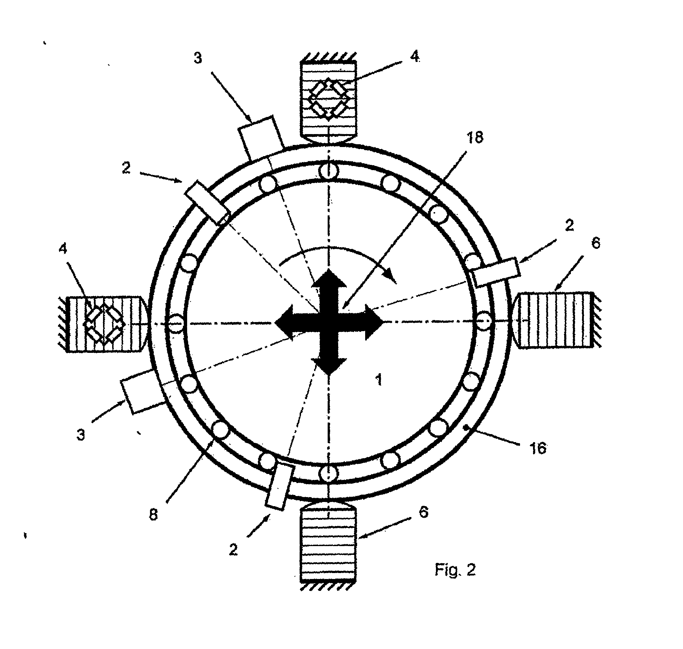

Die Fig. 1 (Längsschnitt) und Fig. 2 (Querschnitt) zeigen eine Spindel 1, welche in einem Frontlager 8 und einem Hinterlager 9 drehbar gelagert ist. An einem Ende der Spindel 1 ist ein Werkzeughalter 15 mit dem Werkzeug 14 eingespannt. Am Ende des Werkzeugs befindet sich der Werkzeugspitze 13. Die Spindel (1) wird von dem Motor 17 angetrieben.

Die unerwünschten Schwingungen 19 an Werkzeugspitze 13 zwischen dem Werkzeug 14 und dem nicht dargestellten Werkstück werden im wesentlichen durch die Rotation der Spindelachse durch beispielsweise konstruktiv verursachte Unwucht, durch Zerspankräfte, Instabilität und/oder Resonanzeffekte erzeugt. Üblicherweise treten diese Effekte spindel- und vorgangsabhängig bei 200 bis 5000 Hz auf. Hierzu wird zur Messung ein Beschleunigungsmesser 3 eingesetzt. Der Beschleunigungsmesser 3 liefert das Messsignal a_{SR}.

Weitere Abweichungen können aufgrund von kinematischen Fehlern, wie Exzentritäten, thermische Einflüsse und statische Belastungen entstehen. Effekte im Frequenzbereich spindelabhängig von kleiner als 500 Hz. Diese Effekte werden von den Dehnmessstreifen 4 mit dem Messsignal x_{SR} und/oder von der Kombination des berührungslosen Ortsgebers 2 mit dem Messsignal x_{SN} und des Winkelgebers 5 mit dem Messsignal x_{WI}.erfasst.

Ebenso kann ein Werkzeugbruch, eine Überfastung, Taumelbewegungen und/oder die Dynamik von Zerspankräften mittels des Beschleunigungsmesser 3 und/oder der Dehnmessstreifen 4 und/oder der Ortsgeber 2 über der Signale a_{SR}, x_{SR}, x_{SN} und x_{WI} beobachtet werden.

Die Messeinrichtungen, wie Ortsgeber 2, Beschleunigungsmesser 3 und die Dehnmessstreifen 4 sind entweder an dem zur Werkzeugseite gerichteten Spindelumfang 10 oder auf dem Gleitring 16 des Frontlagers 8 angebracht. Wie aus Fig. 2 ersichtlich sind am Gleitring 16 des Frontlagers 8 die beiden Dehnmessstreifen 4 rechtwinklig zueinander angeordnet.

In Fig. 1 befindet sich der Winkelgeber 5 am der Werkzeugseite 12 gegenüberliegenden Spindelumfang 11.

Die Messwerte x_{SN}, a_{SR}, x_{SR}, x_{WI} werden über Leitungen in die Steuereinheit 7 eingegeben. In der Steuereinheit werden die gemessenen Daten verarbeitet und ein Korrektursignal F_{PZT} erzeugt. Das Korrektursignal F_{PZT} gelangt über eine Leitung zu den Piezoelementen 6, die dann mittels Gleitring 16 eine korrigierende Gegenbewegung 18 des Frontlagers 8 auslösen.

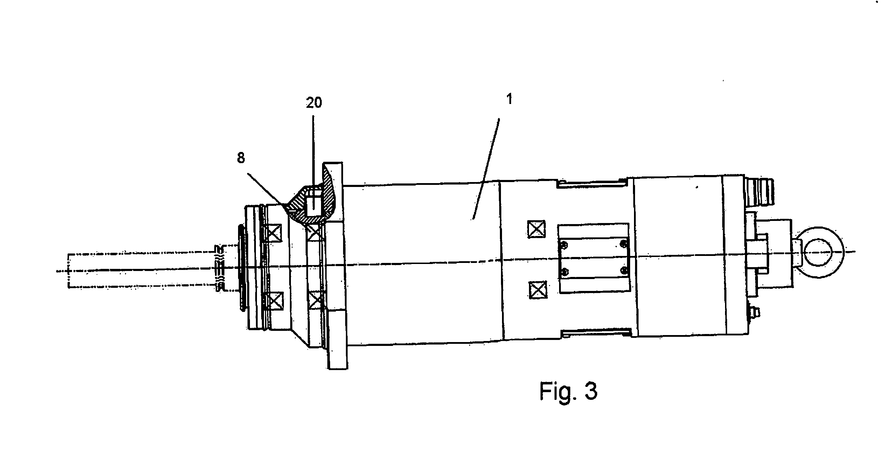

Die Fig. 3 zeigt eine Spindel 1 im Längsschnitt. An dem Frontlager 8 ist ein dreiachsig messender Beschleunigungssensor angeordnet, der die Schwingungen gleichzeitig in allen drei Raumkomponenten x, y, z erfasst.

Die mit der Erfindung verbundenen Vorteile liegen insbesondere darin, dass die Vorrichtung und das Verfahren eine optimale Lösung schaffen, die die unerwünschten Schwingungen der rotierenden Spindel, Abweichungen infolge von thermischen Effekten oder Überlastungen vermindert und darüber hinaus eine Beobachtung der Prozessparameter während der Bearbeitung eines Werkstückes gestattet.

### Bezugszeichen

| | | | |
|---|---|---|---|
| 1 | Spindel | | |
| 2 | Ortsgeber | x_{SN} | Messwert zu 2 |
| 3 | Beschleunigungsmesser | a_{SR} | Messwert zu 3 |
| 4 | Dehnmessstreifen | x_{SR} | Messwert zu 4 |
| 5 | Winkelgeber | x_{WI} | Messwert zu 5 |
| 6 | Piezoelement | F_{PZT} | Stellwert zu 6 |
| 7 | Steuereinheit | | |
| 8 | Frontlager | | |
| 9 | Hinterlager | | |
| 10 | Spindelumfang | | |
| 11 | Spindelumfang | | |
| 12 | Werkzeugseite | | |
| 13 | Werkzeugspitze | | |
| 14 | Werkzeug | | |

- 15: Werkzeughalter
- 16: Gleitring
- 17: Motor
- 18: Gegenbewegung
- 19: Schwingungen
- 20: dreiachsig messender Beschleunigungssensor

## Patentansprüche

1. Vorrichtung zur Verminderung von Schwingungen (19) einer rotierenden in mindestens einem Front - (8) und einem Hinterlager (9) gelagerten Spindel (1) in einer Werkzeugmaschine, wobei die Vorrichtung Messeinrichtungen (2, 3, 4, 5) zur Erfassung der Schwingungen (19) und Korrekturmittel (6) zur Verminderung der Schwingungen (19) aufweist, und dass diese Vorrichtung eine Steuereinheit (7) zur Verarbeitung der Messeinrichtungen (2, 3, 4, 5) und Berechnung der Korrekturwerte für die Korrektureinrichtungen (6) zur Auslösung einer Gegenbewegung (18) zugeordnet ist.
**dadurch gekennzeichnet, dass**
die Messeinrichtungen (2, 3, 4, 5) und die Korrekturmittel (6) unmittelbar berührend oder berührungslos um den Umfang (10, 11) der Spindel (1) und im Bereich der Lager (8, 9) angeordnet sind.

2. Vorrichtung nach Anspruch 1, **dadurch gekennzeichnet, dass** als Messeinrichtungen (2, 3, 4, 5) mindestens ein berührungsfreier Ortsgeber (2), mindestens ein Beschleunigungsmesser (3), mindestens ein Dehnmessstreifen (4)und/oder mindestens einen Winkelgeber (5) vorgesehen sind.

3. Vorrichtung nach Anspruch 1 oder 2, **dadurch gekennzeichnet, dass** als Korrektureinrichtungen (6) mindestens ein Piezoelement (6) und/oder elektrorheologische Einrichtungen vorgesehen sind.

4. Vorrichtung nach Anspruch 1, 2 oder 3, **dadurch gekennzeichnet, dass** ein berührungsloser Ortsgeber (2) an dem zur Werkzeugseite (12) gerichteten Spindelumfang (10) angeordnet ist.

5. Vorrichtung nach mindestens einem der vorherigen Ansprüche, **dadurch gekennzeichnet, dass** mindestens ein Beschleunigungsmesser (3) an dem Aussenumfang des Frontlagers (8) der Spindel (1) angeordnet ist.

6. Vorrichtung nach Anspruch 5, **dadurch gekennzeichnet, dass** der Beschleunigungsmesser (3) als dreiachsig messender Beschleunigungssensor ausgebildet ist.

7. Vorrichtung nach mindestens einem der vorherigen Ansprüche, **dadurch gekennzeichnet, dass** zwei Dehnmessstreifen (4) an dem Aussenumfang des Frontlagers (10) der Spindel (1) rechtwinklig zueinander angeordnet sind.

8. Vorrichtung nach mindestens einem der vorherigen Ansprüche, **dadurch gekennzeichnet, dass** ein berührungsloser Winkelgeber (5) an dem zur Werkzeugseite (12) entgegen gerichteten Spindel umfang angeordnet ist.

9. Vorrichtung nach mindestens einem der vorherigen Ansprüche, **dadurch gekennzeichnet, dass** mindestens zwei Piezoelemente (6) zur Verminderung der Schwingungen (19) an dem Aussenumfang des Frontlagers (8) der Spindel (1) rechtwinklig zueinander angeordnet sind.

10. Verfahren unter Verwendung einer Vorrichtung nach mindestens einem der vorherigen Ansprüche, **dadurch gekennzeichnet, dass** zur Verminderung der Schwingungen (19) der rotierenden Spindel zunächst die Messwerte (x_{SN}, a_{SR}, x_{SR}. x_{WI}) der Messeinrichtungen (2, 3, 4, 5) von der Steuereinheit (7) erfasst werden und in Echtzeit die aus den Messwerten (x_{SN}. a_{SR}, x_{SR}, x_{WI}) berechneten Korrekturwerte an die Korrektureinrichtungen (6) weitergegeben werden, welche die Spindel (1) in die gewünschte nahezu schwingungsfreie Position bringen.

11. Verfahren unter Verwendung einer Vorrichtung nach mindestens einem der vorherigen Ansprüche, **dadurch gekennzeichnet, dass** zur Verminderung der Schwingungen (19) der rotierenden Spindel zunächst die Messwerte (x_{SN}, a_{SR}, x_{SR}, x_{WI}) eines Ortsgebers (2), eines Beschleunigungsmessers (3), der beiden Dehnmessstreifen (4) und eines Winkelgebers (5) in die Steuereinheit (7) eingegeben werden und in Echtzeit die aus den Messwerten (x_{SN}, a_{SR}, x_{SR}. x_{WI}) berechnete Korrekturwerte an die Piezoelemente weitergegeben werden, welche die Spindel (1) mittels einer Korrekturkraft (F_{PZT}) In die gewünschte Position bringen.

## Claims

1. Device for reducing vibrations (19) of a rotating spindle (1) mounted in at least one front (8) and one rear bearing (9) in a machine tool, wherein the device has measuring devices (2, 3, 4, 5) for sensing the vibrations (19) and correction means (6) for reducing the vibrations (19), and in that a control unit (7) for processing the measuring devices (2, 3, 4, 5) and for calculating the correction values for the correction devices (6) is assigned to this device for the purpose of triggering a counter-motion (18),
**characterized in that**
the measuring devices (2, 3, 4, 5) and the correction means (6) are disposed about the periphery (10, 11) of the spindle (1) and in the region of the bearings (8, 9) in a directly contacting or a non-contacting manner.

2. Device according to Claim 1, **characterized in that** at least one non-contacting position transducer (2), at least one acceleration pick-up (3), at least one strain gauge (4) and/or at least one angle transducer (5) are provided as measuring devices (2, 3, 4, 5).

3. Device according to Claim 1 or 2, **characterized in that** at least one piezoelectric element (6) and/or electrorheological devices are provided as correction devices (6).

4. Device according to Claim 1, 2, or 3, **characterized in that** a non-contacting position transducer (2) is disposed at the spindle periphery (10) that is directed towards the tool side (12).

5. Device according to at least one of the preceding claims, **characterized in that** at least one acceleration pick-up (3) is disposed at the outer periphery of the front bearing (8) of the spindle (1).

6. Device according to Claim 5, **characterized in that** the acceleration pick-up (3) is realized as a triaxially measuring acceleration sensor.

7. Device according to at least one of the preceding claims, **characterized in that** two strain gauges (4) are disposed at right angles to one another at the outer periphery of the front bearing (10) of the spindle (1).

8. Device according to at least one of the preceding claims, **characterized in that** a non-contacting angle transducer (5) is disposed at the spindle periphery that is directed contrary to the tool side (12).

9. Device according to at least one of the preceding claims, **characterized in that** at least two piezoelectric elements (6), for reducing the vibrations (19), are disposed at right angles to one another at the outer periphery of the front bearing (8) of the spindle (1).

10. Method using a device according to at least one of the preceding claims, **characterized in that**, for the purpose of reducing the vibrations (19) of the rotating spindle, the measurement values (x_{SN}, a_{SR}, x_{SR}, x_{WI}) of the measuring devices (2, 3, 4, 5) are first sensed by the control unit (7), and the correction values calculated from the measurement values (x_{SN}, a_{SR}, x_{SR}, x_{WI}) are forwarded in real time to the correction devices (6), which bring the spindle (1) into the desired, almost vibration-free position.

11. Method using a device according to at least one of the preceding claims, **characterized in that**, for the purpose of reducing the vibrations (19) of the rotating spindle, the measurement values (x_{SN}, a_{SR}, x_{SR}, x_{WI}) of a position transducer (2), of an acceleration pick-up (3), of the two strain gauges (4) and of an angle transducer (5) are input to the control unit (7), and the correction values calculated from the measurement values (x_{SN}, a_{SR}, x_{SR}, x_{WI}) are forwarded in real time to the piezoelectric elements, which bring the spindle (1) into the desired position by means of a correction force (F_{PZT}).

## Revendications

1. Dispositif pour réduire les oscillations (19) d'une broche (1) en rotation logée dans au moins un palier avant (8) et un palier arrière (9) dans une machine-outil, le dispositif présentant des dispositifs de mesure (2, 3, 4, 5) pour détecter les oscillations (19) et des moyens de correction (6) pour réduire les oscillations (19), et une unité de commande (7) étant associée à ce dispositif pour traiter les dispositifs de mesure (2, 3, 4, 5) et calculer les valeurs de correction pour les dispositifs de correction (6) afin de déclencher un mouvement opposé (18), **caractérisé en ce que** les dispositifs de mesure (2, 3, 4, 5) et les moyens de correction (6) sont disposés avec un contact direct ou sans contact autour du pourtour (10, 11) de la broche (1) et dans la zone des paliers (8, 9).

2. Dispositif selon la revendication 1, **caractérisé en ce que** les dispositifs de mesure (2, 3, 4, 5) prévus sont au moins un codeur d'emplacement (2) sans contact, au moins un accéléromètre (3), au moins un extensomètre à résistance (4) et/ou au moins un codeur d'angle (5).

3. Dispositif selon la revendication 1 ou 2, **caractérisé en ce que** les dispositifs de correction (6) prévus sont au moins un élément piézoélectrique (6) et/ou des dispositifs électrorhéologiques.

4. Dispositif selon la revendication 1, 2 ou 3, **caractérisé en ce qu'**un codeur d'emplacement (2) sans contact est disposé sur le pourtour de la broche (10) dirigé vers le côté de l'outil (12).

5. Dispositif selon au moins l'une des revendications précédentes, **caractérisé en ce qu'**au moins un accéléromètre (3) est disposé sur le pourtour extérieur du palier avant (8) de la broche (1).

6. Dispositif selon la revendication 5, **caractérisé en ce que** l'accéléromètre (3) est réalisé sous la forme d'un détecteur d'accélération à mesure dans trois axes.

7. Dispositif selon au moins l'une des revendications précédentes, **caractérisé en ce que** deux extensomètres à résistance (4) sont disposés perpendiculairement l'un à l'autre sur le pourtour extérieur du palier avant (8) de la broche (1).

8. Dispositif selon au moins l'une des revendications précédentes, **caractérisé en ce qu'**un codeur d'angle (5) sans contact est disposé sur le pourtour de la broche dirigé à l'opposé du côté de l'outil (12).

9. Dispositif selon au moins l'une des revendications précédentes, **caractérisé en ce qu'**au moins deux éléments piézoélectriques (6) destinés à réduire les oscillations (19) sont disposés perpendiculairement l'un à l'autre sur le pourtour extérieur du palier avant (8) de la broche (1).

10. Procédé employant un dispositif selon au moins l'une des revendications précédentes, **caractérisé en ce que** pour réduire les oscillations (19) de la broche en rotation, les valeurs mesurées (x_{SN}, a_{SR}, x_{SR}, x_{WI}) des dispositifs de mesure (2, 3, 4, 5) sont tout d'abord acquises par l'unité de commande (7) et les valeurs de correction calculées à partir des valeurs mesurées (x_{SN}, a_{SR}, x_{SR}, x_{WI}) sont retransmises en temps réel aux dispositifs de correction (6), lesquels amènent la broche (1) dans la position souhaitée quasiment exempte d'oscillations.

11. Procédé employant un dispositif selon au moins l'une des revendications précédentes, **caractérisé en ce que** pour réduire les oscillations (19) de la broche en rotation, les valeurs mesurées (x_{SN}, a_{SR}, x_{SR}, x_{WI}) d'un codeur d'emplacement (2), d'un accéléromètre (3), des deux extensomètres à résistance (4) et d'un codeur d'angle (5) sont tout d'abord entrées dans l'unité de commande (7) et les valeurs de correction calculées à partir des valeurs mesurées (x_{SN}, a_{SR}, x_{SR}, x_{WI}) sont retransmises en temps réel aux éléments piézoélectriques, lesquels amènent la broche (1) dans la position souhaitée au moyen d'une force de correction (F_{PZT}).
